# EUROPÄISCHE PATENTSCHRIFT

(11) **EP 1 212 524 B1**
(45) Veröffentlichungstag und Bekanntmachung des Hinweises auf die Patenterteilung: **26.11.2003**
(21) Anmeldenummer: 00962446.1
(22) Anmeldetag: 06.09.2000
(51) Int. Cl.: F02B 43/10, B60H 3/00, B01D 53/04

(54) **VERFAHREN ZUM BETREIBEN EINES KRAFTFAHRZEUG-VERBRENNUNGSMOTORS**
METHOD FOR OPERATING AN INTERNAL COMBUSTION ENGINE FOR A MOTOR VEHICLE
PROCEDE PERMETTANT DE FAIRE FONCTIONNER UN MOTEUR A COMBUSTION INTERNE DE VEHICULE AUTOMOBILE

(30) Priorität: 06.09.1999 DE 19942492; 01.10.1999 DE 19947509; 02.10.1999 DE 19947448; 06.11.1999 DE 19953440
(43) Veröffentlichungstag der Anmeldung: 12.06.2002
(73) Patentinhaber: Innovationen zur Verbrennungstechnik GmbH, 48446 Wolfsburg (DE)
(72) Erfinder: KELLNER, Mahbobeh, 40885 Ratingen (DE); REINTANZ, Dieter, 34246 Vellmar (DE)
(74) Vertreter: Weidener, Jörg Michael, Dipl.-Ing.
(86) Internationale Anmeldenummer: EP0008709
(87) Internationale Veröffentlichungsnummer: WO01018369

(56) Entgegenhaltungen:
- WO-A-94/15698
- DE-A- 2 734 677
- DE-A- 4 106 547
- DE-A- 4 236 719
- DE-A- 19 522 804
- DE-A- 19 543 884
- DE-A- 19 912 137
- FR-A- 2 755 187
- US-A- 3 817 232
- US-A- 5 517 978
- US-A- 5 649 517
- US-A- 5 908 023

## Beschreibung

Die Erfindung betrifft Verfahren zum Betreiben eines Verbrennungsmotors eines Kraftfahrzeugs nach den Oberbegriffen der Ansprüche 1 bis 4.

Aus der US-A-3,817,232 ist ein Verfahren zum Betreiben eines Verbrennungsmotors eines Kraftfahrzeugs bekannt, bei dem in einem Brennraum ein Gemisch aus Verbrennungsluft und Kraftstoff verbrannt wird, wobei einer einen Adsorber aufweisenden Absorptionseinrichtung Luft zugeführt wird, um eine Sauerstoffanreicherung dieser Luft durch Abtrennung zumindest eines Teils des Stickstoffs dieser Luft zu erzielen.

Aus der Druckschrift FR-A-2 755 187 ist ein Verfahren zum Betreiben eines Verbrennungsmotors eines Kraftfahrzeuges bekannt, bei dem ebenfalls eine Sauerstoffanreicherung der Verbrennungsluft vorgesehen ist. Die sauerstoffangereicherte Verbrennungsluft wird der Verbrennungskammer zugeführt, während der bei der Sauerstoffanreicherung freigesetzte Stickstoffstrom entweder abgeführt oder über ein Ventil ebenfalls der Verbrennungskammer zugeführt werden kann. Weiterhin ist es vorgesehen, Umgebungsluft zum Abgas hinzuzuführen.

Die DE-A-195 43 884 betrifft Verfahren sowie Vorrichtungen zur Einspeisung von Sauerstoff in eine Verbrennungskraftmaschine, wobei ein sauerstoffangereicherter Volumenstrom in einer nicht-kryogenen Trennanlage aus einem Luftvolumenstrom als Permeat gewonnen und der Verbrennungskraftmaschine zugeführt wird. Der sauerstoffangereicherte Volumenstrom aus der nicht-kryogenen Trennanlage wird komprimiert und in einem Pufferbehälter zwischengespeichert. Die Temperatur des Trennmittels der nicht-kryogenen Trennanlage wird geregelt.

Aus der WO 94/15698 ist eine Adsorptionseinrichtung zur Sauerstoffanreicherung der Verbrennungsluft durch Abtrennung zumindest eines Teils des Stickstoffs bekannt. In dieser Veröffentlichung ist unter anderem der Einsatz dieser Adsorptionseinrichtung für Verbrennungsprozesse bei Verbrennungsmotoren beschrieben. Durch die Abtrennung zumindest eines Teils des Stickstoffes aus der Verbrennungsluft, d. h. der zugeführten Umgebungsluft, kann der Volumenstrom der sauerstoffangereicherten Verbrennungsluft reduziert werden. Dabei kann der Anteil an Sauerstoff in der Verbrennungsluft auf bis zu 95 % gesteigert werden. Weiter führt die Abtrennung von Stickstoff dazu, daß höhere Temperaturen bei der Verbrennung erzielt werden können, da die bei der Verbrennung frei werdende Energie nicht zur Erhitzung des an der Verbrennung nicht teilnehmenden Stickstoffes verwendet wird. Letztlich ergibt sich eine vollkommenere Verbrennung bei höheren Temperaturen, so daß praktisch kein Ruß entsteht und auch der sonstige Schadstoffausstoß an CO, HC, NMVOC, NOₓ und dergleichen bei entsprechenden Primärmaßnahmen erheblich verringert wird. Durch den erhöhten Sauerstoffgehalt der Verbrennungsluft ergeben sich aber auch höhere Zündgeschwindigkeiten, eine Absenkung der Zündtemperatur und ein vergrößerter Zündbereich des Gemisches. Durch die verbesserten Zündparameter ist es möglich, andere Kraft- bzw. Brennstoffe einzusetzen, die ansonsten aufgrund ihrer für konventionelle Verbrennungsverfahren ungeeigneten Zünd- und Verbrennungseigenschaften nicht interessant sind. Darüber hinaus erhöht sich natürlich bei dem bekannten Verbrennungsmotor auch der Wirkungsgrad und es ergibt sich aufgrund der verbesserten, vollständigeren Verbrennung ein geringerer Kraftstoffverbrauch.

Die DE-A-27 34 677 beschreibt ein Verfahren zum Betreiben einer Brennkraftmaschine unter Verwendung eines Gases mit gegenüber Luft erhöhtem Sauerstoffanteil, wobei das Gas kontinuierlich und regelbar bezüglich Menge und Zusammensetzung am Ort der Brennkraftmaschine aus Luft erzeugt wird. Das sauerstoffangereicherte Gas kann beispielsweise durch ein Druckwechseladsorptionsverfahren mit kurzen Schaltzeiten erzeugt werden. Darüber hinaus ist aus der DE-A-195 22 804 die Sauerstoffeinspeisung über die Klimaanlage in einen Kraftfahrzeug-Innenraum bekannt, wobei durch eine Zuleitung Sauerstoff über die Klimaanlage dem Innenraum zugeführt wird. Die DE-A-41 06 547 betrifft Verfahren zur Sauerstoffanreicherung von Luft in einem adsorptiven Druckwechsel-Verfahren mit Hilfe von Molekular-Zeolithen.

Gerade in der heutigen Zeit werden an die Motoren erhöhte Anforderungen hinsichtlich des Wirkungsgrades und des Kraftstoffverbrauchs gestellt. Allerdings soll nicht nur der Kraftstoffverbrauch der Motoren möglichst ohne merkliche Absenkung der Leistung reduziert werden, es sollen auch weniger Schadstoffe, wie z. B. NOₓ, HC, NMVOC und CO in den Abgasen an die Atmosphäre abgegeben werden. Aufgrund der immer strenger werdenden gesetzlichen Anforderungen hinsichtlich der Emissionsgrenzwerte, aber auch durch die immer höhere Besteuerung von Brennstoffen ist man ausgesprochen bestrebt, den Wirkungsgrad der vorhandenen Verbrennungsmotoren weiter zu erhöhen, wobei aber auch Maßnahmen, die den Brennstoffverbrauch und die Schadstoffemissionen reduzieren, von erheblichem Interesse sind.

Aufgabe der vorliegenden Erfindung ist es, die Vorteile der Adsorptionstechnologie im Bereich von Kraftfahrzeugen und Kraftfahrzeug-Verbrennungsmotoren zu nutzen und insbesondere Verfahren zum Betreiben von Kraftfahrzeug-Verbrennungsmotoren zur Verfügung zu stellen, wobei die Adsorptionseinrichtung einfach und kostengünstig aufgebaut und auch für einen Serieneinsatz geeignet ist.

Die zuvor hergeleitete und angegebene Aufgabe ist bei einem Verfahren zum Betreiben eines Verbrennungsmotors der eingangs genannten Art erfindungsgemäß durch die kennzeichnenden Merkmale des Anspruchs 1 gelöst. Erfindungsgemäß ist nämlich festgestellt worden, daß die Adsorptionstechnik sich nicht nur gut dazu eignet, den Sauerstoffanteil in der Verbrennungsluft zu erhöhen. Grundsätzlich ist es auch möglich, sauerstoffangereicherte Verbrennungsluft in den Abgasstrom, vorzugsweise unmittelbar im Anschluß an die Verbrennung, zu führen. Bei entsprechend hohen Temperaturen im Abgas findet bei einem entsprechenden Sauerstoffanteil im Abgas eine Nachverbrennung statt, was zu einer verbesserten Abgasreinigung führt.

Die eingangs hergeleitete und angegebene Aufgabe ist bei einem Verfahren zum Betreiben eines Verbrennungsmotors der eingangs genannten Art erfindungsgemäß weiterhin durch die kennzeichnenden Merkmale des Anspruchs 2 gelöst

Ein besonderer zusätzlicher Vorteil der vorliegenden Erfindung ergibt sich durch die separate Zuführung sauerstoffangereicherter Verbrennungsluft unabhängig von Zuführung der nicht-sauerstoffangereicherten Verbrennungsluft. Diese Ausgestaltung hat den scheinbaren Nachteil, daß für die jeweiligen Zuführungsleitungen eine Änderung der einzelnen Zylinder erforderlich ist. Im Rahmen der Serienfertigung neuer Zylinder fällt dies jedoch kostenmäßig kaum ins Gewicht. Es überwiegen die sich durch die separate Zuführung ergebenden Vorteile, die darin bestehen, daß im Verbrennungsraum an ganz bestimmten Stellen definiert sauerstoffangereicherte und nicht-sauerstoffangereicherte, also "normale" Verbrennungsluft zugegeben werden kann. Es ist nämlich festgestellt worden, daß es bei der Zündung des Kraftstoff-Luft-Gemisches im Brennraum Bereiche gibt, in denen die Verbrennung vollständig erfolgt, während in anderen Bereichen das Kraftstoff-Luft-Gemisch unvollständig verbrennt. Dies hat beispielsweise bei Dieselmotoren das in der Praxis häufig zu beobachtende Phänomen des "Rußens" zur Folge. Durch die Realisierung separater Zuführungen für sauerstoffangereicherte und nicht-sauerstoffangereicherte Verbrennungsluft zum Brennraum kann an bestimmten Stellen, an denen sonst keine vollständige oder auch nicht ausreichende Verbrennung stattfindet, sauerstoffangereicherte Verbrennungsluft zugeführt werden, um zu einer optimalen Verbrennung zu kommen. Derartige Bereiche, in denen nur eine unvollständige Verbrennung stattfindet, sind insbesondere die Zylinderwandung sowie die stirnseitigen Rand- bzw. Eckbereiche des durch Kolben und Zylinder gebildeten Brennraumes. Die Zuführung der sauerstoffangereicherten Luft kann über Ventile, Rückschlagklappen oder offenporige Werkstoffe erfolgen.

Die Erfindung läßt sich aber auch in anderer Weise als zuvor beschriebenen bei Verbrennungsmotoren nutzen, nämlich insbesondere bei solchen, die einen Turbolader aufweisen. Bekanntlich haben eine Vielzahl von Turbolader aufweisenden Verbrennungsmotoren im unteren Drehzahlbereich ein sogenanntes Turboloch. Erst nach Erreichen einer gewissen Drehzahl des Turboladers nimmt die Leistung des Verbrennungsmotors erheblich zu. Die Auswirkung des Turbolochs wird durch die Zuführung sauerstoffangereicherter Verbrennungsluft ausgeglichen. Hierdurch ergibt sich im niedrigen Drehzahlbereich ein erhöhtes Drehmoment des Motors. Setzt die Funktion des Laders ein, wird entsprechend weniger sauerstoffangereicherte Luft zugeführt. Es versteht sich, daß in diesem Zusammenhang eine Steuereinrichtung vorgesehen ist, um die Menge der dem Verbrennungsmotor zugeführten sauerstoffangereicherten Verbrennungsluft derart zu steuern, daß sich ein im wesentlichen konstanter Leistungsanstieg ergibt.

Wie eingangs bereits ausgeführt worden ist, ist im Zusammenhang mit der vorliegenden Erfindung festgestellt worden, daß zwar ein gegenüber dem Sauerstoffanteil in der Luft erhöhter Sauerstoffanteil in der Verbrennungsluft vorteilhaft ist, um die eingangs beschriebenen Effekte und Vorteile zu erzielen. Wird jedoch nur ein geringer Teil des in der Luft vorhandenen Stickstoffs durch Sauerstoff ersetzt, verbleibt ein relativer großer Stickstoffanteil, so daß sich nach wie vor mit einem nicht unerheblichen Grad an Schadgasen wie z.B. NOₓ belastete Abgase ergeben.

Zur Lösung dieses Problems ist nun erfindungsgemäß vorgesehen, daß der sauerstoffangereicherten Verbrennungsluft vor der Verbrennung ein Trägergas, bei dem es sich nicht um Stickstoff handelt, zugegeben wird, das nicht an der Verbrennung teilnimmt und auch nach der Verbrennung als solches im Abgas wieder vorliegt. Auf diese Weise ist es möglich, zunächst die Verbrennungsluft in sehr hohem Maße mit Sauerstoff anzureichern und damit einen Großteil des in der Luft vorhandenen Stickstoffs zu entfernen. Anschließend wird die vorzugsweise in hohem Maße sauerstoffangereicherte Verbrennungsluft mit dem Trägergas verdünnt und zwar soweit, bis sich der gewünschte Anteil an Sauerstoff ergibt, um eine kontrollierte, vollständige Verbrennung ohne schädliche Abgase zu erzielen. Letztlich ist der Stickstoff zumindest teilweise durch das Trägergas ersetzt worden. Es darf darauf hingewiesen werden, daß es nicht mehr ganz richtig ist, von "Verbrennungsluft" zu sprechen, da das der Verbrennung zugeführte Gas aufgrund des Ersatzes von Stickstoff durch das Trägergas mit "Luft" bzw. der üblichen Luftzusammensetzung nicht mehr vergleichbar ist.

Als Trägergas werden bevorzugt Edelgase und insbesondere Helium verwendet. Gerade die Verwendung von Helium bietet verschiedene Vorteile, da Helium eine relativ hohe Wärmeleitfähigkeit hat, was letztlich dazu führt, daß das Abgas eine entsprechend höhere Temperatur hat, die zu Heizungszwecken und anderen prozeßtechnischen Zwecken genutzt werden kann. Grundsätzlich ist es aber auch möglich, andere Gase oder Gasgemische zu verwenden. Der Grundgedanke ist dabei stets, daß das Trägergas während der Verbrennung keine Verbindung eingeht, also nicht an der Verbrennung teilnimmt und in den Abgasen als solches noch vorliegt. Konstruktiv ist eine entsprechende Steuereinrichtung vorgesehen, die in Abhängigkeit von der vom Benutzer gewünschten Motorleistung den Anteil an Sauerstoff und/oder Trägergas zudosiert, so daß sich den jeweiligen Anforderungen entsprechend optimale Verbrennungswerte ergeben.

Damit das Trägergas nicht ständig erneuert werden muß, wird es im Kreislauf geführt. Dabei versteht es sich, daß zur Regeneration des Trägergases aus dem Abgasstrom der gesamte Abgasstrom des Verbrennungsmotors über die Rückgewinnungseinrichtung geführt wird. Konstruktiv ist hierzu eine entsprechende Regenerations- oder Rückgewinnungseinrichtung vorgesehen. Diese kann ebenfalls nach dem Prinzip der Adsorptionstechnik arbeiten, es kann aber grundsätzlich auch eine Membraneinrichtung zur Rückgewinnung des Trägergases eingesetzt werden.

Da jedoch kein Kreislaufprozeß letztlich hundertprozentig arbeitet, also stets Verluste auftreten, muß an einer von außen zugeführten Stelle ein Anschluß zur erneuten Zuführung von Trägergas vorgesehen sein. Über diesen Anschluß kann ein entsprechender Vorratsbehälter für Trägergas stets neu gefüllt werden oder aber es kann eine neue Kartusche mit Trägergas eingesetzt werden.

Wird als Rückgewinnungseinrichtung eine Adsorptionseinrichtung verwendet, kann diese der eingangs beschriebenen, jedenfalls vom konstruktiven Aufbau her im wesentlichen entsprechen. Allerdings handelt es sich dann bei dem Trennmittel in den Adsorbern um ein Kohlenstoffmolekularsieb, und zwar insbesondere auf der Grundlage einer Aktivkohle. In diesem Zusammenhang ist es dann besonders günstig, eine Abgaskühlung vorzusehen, damit es aufgrund der hohen Abgastemperaturen nicht zu einer Beschädigung des Absorptionsmittels kommt.

Weiterhin bietet es sich an, wenn zusätzlich zum Adsorptionsmittel im Adsorber ein Trockenmittel vorgesehen ist. Hierdurch wird der Anteil an Wasserdampf in der Verbrennungsluft verringert, was letztlich weniger Ballast bedeutet und wiederum zu einer vollkommeneren Verbrennung bzw. zu einem verbesserten Wirkungsgrad beiträgt. Im übrigen bietet es sich in diesem Zusammenhang auch an, die Verbrennungsluft vor dem Zuführen zur Adsorptionseinrichtung zu erwärmen. Dies führt nicht nur zu einer Verringerung des Wasserdampfes, sondern auch zu einer verbesserten Adsorption des Stickstoffs. Des weiteren bietet es sich an, das Trockenmittel und/oder das Adsorptionsmittel zu beheizen. Dies kann elektrisch und/oder über eine Abgasführung oder aber über den Kühlwasserkreislauf erfolgen. Zweckmäßig wäre es in diesem Zusammenhang, nicht nur die Außenwandungen des Adsorbers zu erhitzen, da dies insbesondere im Hinblick auf die relativ kurzen Adsorptions- und Desorptionsphasen bei der Adsorption bzw. Desorption nur zu einer Erwärmung der äußeren Bereiche des jeweiligen Mittels führt. Bevorzugt ist es, wenn in das Innere des Adsorbers hineingeführte Wärmeübertragungselemente beispielsweise in Form einer Heizspirale oder einer rohrförmigen Wärmetauschereinrichtung vorgesehen sind, so daß sich ein großflächiger Wärmeübergang zur Erzielung einer gleichmäßigen Wärmeverteilung ohne zu starke Temperaturerhöhung in den Randbereichen ergibt Um dabei eine Beschädigung des Trockenmittels oder aber des Adsorptionsmittels zu vermeiden, sollten Temperaturen von 300 °C nicht überschritten werden.

In diesem Zusammenhang kann es sich anbieten, im Adsorber wenigstens einen Sensor im Trockenmittel und/oder Adsorptionsmittel vorzusehen, um den Sättigungsgrad des Trocken- bzw. Adsorptionsmittels zu überprüfen. Dabei könnte von den Sensoren ein entsprechender Impuls auf die Desorptionsintervalle gegeben werden. Es kann damit nicht nur die N₂-Sättigung sondern auch der Wassergehalt einen Impuls zur Desorption bzw. Regeneration des Adsorbers geben.

Beim Zustandekommen der vorliegenden Erfindung ist erkannt worden, daß die Sauerstoffanreicherung der dem Brennraum zugeführten Verbrennungsluft vorteilhaft ist, jedoch nur in einem ganz bestimmten Maße, wenn diese Technologie bei den bekannten und bisher in der Praxis verwendeten Motoren eingesetzt wird. Erfindungsgemäß ist daher vorgesehen, daß lediglich ein Teil der der Verbrennung zugeführten Verbrennungsluft sauerstoffangereichert wird. Bevorzugt ist dabei, daß der Sauerstoffanteil der der Verbrennung zugeführten Verbrennungsluft zwischen 21 % und 30 % beträgt. Auch bei diesen Sauerstoffwerten läßt sich eine erheblich verbesserte Verbrennung mit einem erhöhten Motorwirkungsgrad erzielen.

Bevorzugt wird als Adsorptionsmittel für den Stickstoff ein Zeolith verwendet, wobei es sich im übrigen anbietet, daß dem Adsorber eine Verdichtungseinrichtung vorgeschaltet ist. Der erzeugte Druck der Verdichtungseinrichtung sollte dem optimalen Auslegungspunkt der Zeolithe nahekommen und/oder an die verfahrenstechnischen Bedürfnisse des Verbrennungsprozesses angepaßt sein. Als Verdichtungseinrichtung kann grundsätzlich jegliche Art von Verdichter eingesetzt werden. Der Verdichter kann im übrigen beispielsweise mit der Nockenoder Kurbelwelle oder dem Anlasser gekoppelt sein. Auch ist die Verwendung eines Turbo- oder G-Laders ohne weiteres möglich. Weiterhin kann als Verdichter auch ein üblicher Kolbenverdichter oder auch ein Schraubenverdichter eingesetzt werden. Des weiteren könnte auch eine Kolben-Zylinder-Einheit des Verbrennungsmotors als Verdichter eingesetzt werden. In diesem Falle würden beispielsweise bei einem an sich bekannten Vierzylindermotor drei Zylinder für die Verbrennung und ein Zylinder für die Verdichtung der Verbrennungsluft verwendet werden. Auch ist der Einsatz einer elektrischen Antriebseinrichtung möglich. Bei Versuchen ist im übrigen festgestellt worden, daß ein optimaler Wirkungsgrad beim Adsorbieren erzielt wird, wenn die Adsorptionseinrichtung mit einem Überdruck zwischen 3 und 5 bar betrieben wird.

Um einen Dauerbetrieb der Adsorptionseinrichtung bei gleichbleibender Adsorptionsleistung gewährleisten zu können, sind wenigstens zwei parallel geschaltete Adsorber vorgesehen. Zwischen diesen Adsorbern kann dann regelmäßig umgeschaltet werden. Zur Umschaltung dient eine Steuereinrichtung, die den Adsorbern vor- und nachgeschaltete Steuerventile entsprechend ansteuert. Bevorzugt ist es dabei, einen Adsorber mindestens 20 Sekunden zur Adsorption zu betreiben. Bevorzugt dauert die Adsorptionsphase eines Adsorbers etwa eine Minute, bevor auf den anderen Adsorber umgeschaltet wird. Dabei bietet es sich besonders an, wenn die Adsorber für einen kurzen Zeitraum gleichzeitig betrieben werden, so daß in jedem Falle eine kontinuierliche Zuführung von sauerstoffangereicherter Verbrennungsluft zum Ausgleichsbehälter, sofern ein solcher vorgesehen ist, gewährleistet ist.

Im übrigen ist, wie zuvor bereits ausgeführt worden ist, beim Betrieb von wenigstens zwei parallel geschalteten Adsorbern vorgesehen, daß nach dem Umschalten von dem einen Adsorber auf den anderen Adsorber der eine Adsorber geöffnet, der Überdruck also abgelassen wird, so daß der adsorbierte Stickstoff desorbiert. In diesem Zusammenhang bietet es sich besonders an, das Öffnen des Adsorbers nicht nur kurzfristig vorzunehmen, sondern etwa während der gesamten Adsorptionsphase des anderen Adsorbers. Zwar desorbiert beim Ablassen des Druckes des einen Adsorbers ein Großteil des Stickstoffes unverzüglich aus dem Adsorptionsmittel, die Desorption setzt sich allerdings auch im drucklosen Zustand noch fort, so daß anschließend die gesamte Adsorptionsphase des anderen Adsorbers zur Desorption des einen Adsorbers ausgenutzt werden kann.

Außerdem kann auch vorgesehen sein, daß über entsprechende Leitungen eine Spülung der Adsorber während der jeweiligen Desorptionsphase durchgeführt wird. Die Spülung kann mit "normaler" Verbrennungsluft, also aus der Umgebung angesaugter, nicht-sauerstoffangereicherter Luft, aber auch mit sauerstoffangereicherter Verbrennungsluft aus dem Ausgleichsbehälter oder durch im Kreislauf geführte sauerstoffangereicherte Verbrennungsluft durchgeführt werden. Vorteilhaft ist im übrigen eine Rückspülung der Adsorber, also eine Spülung zum Desorbieren in entgegengesetzter Richtung zur Durchströmungsrichtung beim Adsorbieren.

Die Steuerung der erfindungsgemäßen Adsorptionseinrichtung erfolgt vorzugsweise über eine entsprechende Einrichtung. Bei einer einfachen Ausgestaltung erfolgt die Steuerung über 3-Wege-Ventile und diese ansteuernde Relais. Bei den vorgenannten Bauteilen handelt es sich um gängige Komponenten, so daß ein einfacher und kostengünstiger Aufbau ohne weiteres gewährleistet ist. Im übrigen läßt sich eine sehr einfache Ausbildung der Steuereinrichtung gewährleisten, da bei entsprechendem Aufbau der Steuerung die jeweiligen Ventile nur entgegengesetzt arbeiten müssen. In jedem Falle läßt sich über die vorgenannte Steuerung in einfacher Weise die Zudosierung der sauerstoffangereicherten Verbrennungsluft erreichen.

Weiterhin ist es von Vorteil, daß der Sauerstoffgehalt der Verbrennungsluft nach der Adsorption des Stickstoffs gemessen und in Abhängigkeit von der jeweiligen Betriebssituation des Verbrennungsmotors geregelt oder gesteuert wird. Auch dies erfolgt über die Steuereinrichtung. Durch die Messung und die anschließende Regelung bzw. Steuerung läßt sich also die Verbrennung an bestimmte Betriebssituationen des Verbrennungsmotors anpassen.

Weiter kann der erfindungsgemäße Grundgedanke des Einsatzes von sauerstoffangereicherter Luft bei Kraftfahrzeugen auch noch in einer anderen besonders vorteilhaften Anwendung genutzt werden. Bei Fahrzeugen moderner Bauart kann im eingeschalteten Umluftbetrieb die in der Fahrgastzelle befindliche Luft zirkulieren. Diese zirkulierte Umluft wird im Winter über die im Kraftfahrzeug vorhandene Heizung erwärmt, während sie im Sommer über eine Klimaanlage gekühlt wird. Nachteilig ist, daß der Luftsauerstoff in der zirkulierten Umluft durch den Benutzer allmählich verbraucht wird. Mit zunehmender Fahrzeit wird die Qualität der Luft in der Fahrgastzelle daher immer schlechter. In der Regel wird dem dadurch Abhilfe geschaffen, daß der Umluftbetrieb nur kurzzeitig eingeschaltet bleibt und/oder ein Fenster geöffnet wird. Damit wird jedoch dem von der Heizung einerseits und der Klimaanlage andererseits erzeugte und gewünschte Effekt der Erwärmung bzw. Kühlung entgegengewirkt. Mit stärker sinkendem Energieeinsatz für die Motorleistung steht immer weniger Energie für die im Fahrgastraum erforderlichen Heiz- und Kühlzwecke zur Verfügung.

Die Erfindung schafft nun insofern Abhilfe, daß im Umluftbetrieb gezielt Sauerstoff insbesondere über eine Adsorptionseinrichtung der Fahrgastzelle zugeführt wird. Hierbei wird der Sauerstoffgehalt in der Fahrgastzelle während des Umluftbetriebs gemessen und in Abhängigkeit des Sauerstoffgehalts der Luft in der Fahrgastzelle wird Sauerstoff zugeführt, so daß sich der erforderliche Anteil an Sauerstoff ergibt, den üblicherweise die Umgebungsluft hat. Auf diese Weise hat die Luft in der Fahrgastzelle auch im Umlaufbetrieb stets den richtigen Sauerstoffgehalt, ohne daß während des Betriebs ständig frische Luft zugeführt werden muß. Man wirkt somit einer schnelleren Ermüdung der Fahrzeuginsassen und insbesondere des Fahrzeugführers entgegen und spart Energie für die Heizung bzw. die Kühlung.

Besonders vorteilhaft ist es in diesem Zusammenhang, wenn während des Heizungsbetriebs der zugeführte Sauerstoff ebenfalls erwärmt wird, während er bei Betrieb der Klimaanlage gekühlt wird, so daß die in der Fahrgastzelle gewünschte Temperatur von dem zugeführten Sauerstoff nicht beeinflußt wird.

Zudem ist es bevorzugt, daß dem Adsorber ein Ausgleichsbehälter für Luft vorund/oder nachgeschaltet ist. Der vorgeschaltete Ausgleichsbehälter kann gerade dann sinnvoll sein, wenn als Verdichter ein Kolbenverdichter verwendet wird, um Pulsationen zu vermeiden. Dieser Ausgleichsbehälter, dient dann als Dämpfungseinrichtung. Der nachgeschaltete Ausgleichsbehälter dient als Puffer, so daß auch in solchen Betriebszuständen, bei denen über den Adsorber nicht genügend Sauerstoff zur Verfügung gestellt werden kann, stets ein hinreichender Anteil sauerstoffangereicherter Verbrennungsluft zur Verfügung steht.

Bevorzugt ist es in diesem Zusammenhang, daß der zuvor beschriebene Verdichter mit einem Druckschalter im Ausgleichsbehälter zusammenwirkt, so daß bei Erreichen eines bestimmten Druckes im Ausgleichsbehälter der Verdichter abgestellt bzw. im Leerlauf weiter betrieben wird. Grundsätzlich ist es aber auch möglich, die Adsorptionsleistung der Motorleistung anzupassen. Hier ist dann eine direkte Abhängigkeit von der Verbrennung bzw. vom Sauerstoff-Verbrauch vorgesehen, während die zuvor beschriebene Ausführungsform völlig unabhängig von der Verbrennung und damit vom Sauerstoff-Verbrauch ist.

Weiter ist bevorzugt, wenn nach Abstellen der Adsorptionseinrichtung die den Ausgleichsbehältern vor- und nachgeschalteten Ventile geschlossen werden, um den Überdruck im jeweiligen Ausgleichsbehälter zu halten.

Da ein Adsorber nicht unendlich lang bei gleicher Adsorptionsleistung betrieben werden kann, ist am Adsorber eine Stickstoff-Ablaßleitung vorgesehen, über die der adsorbierte Stickstoff bei Ablassen des Druckes abgeführt werden kann. Durch Öffnen der Stickstoff-Ablaßleitung ergibt sich eine Desorption und eine Abgabe des Stickstoffes an die Umgebung, so daß der Adsorber anschließend wieder zur Adsorption eingesetzt werden kann.

Außerdem ist zur kompakten Ausbildung der Adsorptionseinrichtung vorgesehen, daß die Adsorber und der Ausgleichsbehälter jeweils zylindrisch oder säulenförmig und im Hinblick auf die äußeren Abmaße baugleich sind. Die Adsorber und der Ausgleichsbehälter können dann zu einer gemeinsam handhabbaren Baugruppe zusammengefaßt werden. Besonders vorteilhaft ist es aber, daß die Adsorber und/oder der Ausgleichsbehälter jede beliebige Form haben können, das heißt den vorhandenen Platzverhältnissen angepaßt sind, wenn bestimmte Betriebsparameter wie z. B. Strömungsgeschwindigkeit, Druck und Temperatur eingehalten werden. Letztlich ist es so, daß die gesamte Vorrichtung oder auch nur Einzelteile der Vorrichtung dort innerhalb des Kraftfahrzeugs plaziert werden, wo ein entsprechender Raum zur Verfügung steht. Besonders bietet sich allerdings der Motorraum an, da in diesem Falle kurze Leitungen möglich sind und daraus wenig Strömungsverluste resultieren.

Das Gehäuse des Adsorbers und/oder des Ausgleichsbehälters können aus Aluminium bzw. einer Aluminiumlegierung bestehen. Es können aber auch alle anderen Materialien eingesetzt werden, besonders bevorzugt ist beispielsweise ein Schichtmaterial, bestehend aus einem Metall, insbesondere Aluminium oder Stahl, in Verbindung mit Kunststoff oder anderen Verbundstoffen. Dieses Schichtmaterial hat den Vorteil, daß es einerseits sehr leicht ist, andererseits aber aufgrund der metallischen Schicht diffusionsdicht ist

Im übrigen versteht es sich, daß die Erfindung auch auf ein Kraftfahrzeug mit einem Verbrennungsmotor der zuvor genannten Art sowie eine Adsorptionseinrichtung der zuvor beschriebenen Art zur Verwendung bei einem Verbrennungsmotor gerichtet ist. Schließlich kann die Erfindung auch bei Motoren eingesetzt werden, die nicht in Kraftfahrzeugen verwendet werden. Auch ist der Einsatz des erfindungsgemäßen Verfahren bzw. der Adsorptionseinrichtung bei anderen Betriebsarten, in denen Luft oder Sauerstoff benötigt wird, ohne weiteres anwendbar, wie z. B. bei Brennstoffzellen, Gasturbinen und insbesondere stationären Feuerungsanlagen.

Weitere Merkmale und Vorteile ergeben sich aus der nachfolgenden Beschreibung von Ausführungsbeispielen der Erfindung anhand der Zeichnung. Es zeigt
- Fig. 1: eine schematische Darstellung einer erfindungsgemäßen Adsorptionseinrichtung zur Sauerstoffanreicherung eines Teils der Verbrennungsluft für einen Kraftfahrzeug-Verbrennungsmotor,
- Fig. 2: eine der Fig. 1 entsprechende Ansicht einer weiteren Ausführungsform einer erfindungsgemäßen Adsorptionseinrichtung,
- Fig. 3: eine der Fig. 1 entsprechende Darstellung einer anderen Ausführungsform einer erfindungsgemäßen Adsorptionseinrichtung,
- Fig. 4: eine der Fig. 1 im wesentlichen entsprechende Darstellung einer weiteren erfindungsgemäßen Adsorptionseinrichtung,
- Fig. 5: ein der Fig. 2 im wesentlichen entsprechende. Darstellung einer weiteren Ausführungsform einer erfindungsgemäßen Adsorptionseinrichtung
- Fig. 6: eine der Fig. 3 im wesentlichen entsprechende Darstellung einer weiteren Ausführungsform einer erfindungsgemäßen Adsorptionseinrichtung und
- Fig. 7: eine der Fig. 1 im wesentlichen entsprechende Darstellung einer weiteren Ausführungsform einer erfindungsgemäßen Adsorptionseinrichtung.

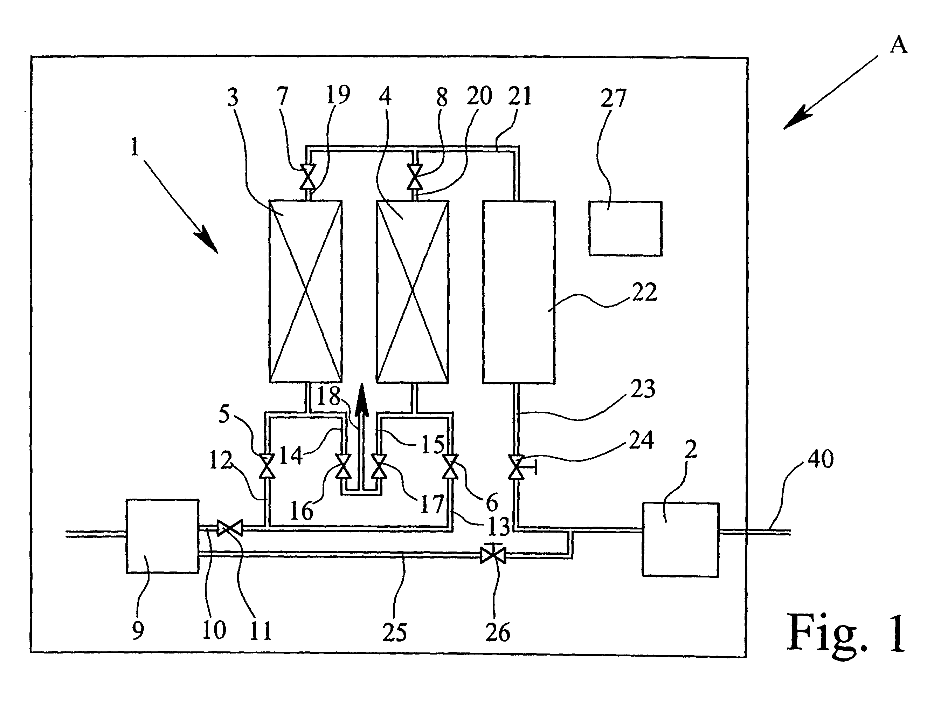

In Fig. 1 ist eine Adsorptionseinrichtung 1 zur Sauerstoffanreicherung zumindest eines Teils der Verbrennungsluft für einen Kraftfahrzeug-Verbrennungsmotor eines Kraftfahrzeugs A dargestellt, bei dem ein Gemisch aus Verbrennungsluft und Kraftstoff verbrannt wird. Von dem Kraftfahrzeug-Verbrennungsmotor selbst ist lediglich ein Brennraum 2 schematisch dargestellt. Vorliegend ist die Adsorptionseinrichtung 1 dem Kraftfahrzeug-Verbrennungsmotor unmittelbar zugeordnet, sie befindet sich im Motorraum des den Verbrennungsmotor aufweisenden Kraftfahrzeugs. Grundsätzlich kann sich die Absorptionseinrichtung aber auch an jeder anderen Stelle im Kraftfahrzeug befinden.

Wesentlich ist nun zunächst, daß die Adsorptionseinrichtung 1 zur Abtrennung zumindest eines Teils des Stickstoffs aus der Verbrennungsluft vorgesehen ist. Hierzu weist die Adsorptionseinrichtung 1 vorliegend zwei Absorber 3, 4 auf. Es versteht sich, daß grundsätzlich auch eine Mehrzahl von in Reihe und/oder parallel geschalteten Absorbern vorgesehen sein kann. Jeder der Absorber 3, 4 enthält ein Stickstoff adsorbierendes Adsorptionsmittel. Hierbei handelt es sich jeweils um ein Zeolith. Es versteht sich, daß grundsätzlich auch andere Adsorptionsmittel Anwendung finden können.

Neben dem Zeolith als Adsorptionsmittel für Stickstoff ist in jedem Adsorber 3, 4 zusätzlich noch ein Trockenmittel für Wasserdampf vorgesehen. Das Trokkenmittel stellt in Durchströmungsrichtung zur Adsorption die erste Schüttung im Adsorber dar. Die beiden Adsorber 3, 4 sind parallel geschaltet. Den Adsorbern 3, 4 vorgeschaltet ist jeweils ein Steuerventil 5, 6. Im übrigen sind den Adsorbern 3, 4 entsprechende Steuerventile 7, 8 nachgeschaltet.

Weiterhin ist den Adsorbern 3, 4 eine Verdichtungseinrichtung 9 vorgeschaltet. In der Verdichtungseinrichtung 9 wird die der Adsorptionseinrichtung 1 zugeführte Verbrennungsluft verdichtet. Aus der Verdichtungseinrichtung 9 führt eine Leitung 10, in der sich ein nicht unbedingt erforderliches Steuerventil 11 befindet. Die Leitung 10 verzweigt sich in die Zuführleitungen 12, 13 zu den Adsorbem 3, 4, in denen die Steuerventile 5, 6 vorgesehen sind. Von den Zuführleitungen 12, 13 ist jeweils eine Abführleitung 14, 15 abgezweigt, wobei in jeder Abführleitung 14, 15 ein Steuerventil 16, 17 vorgesehen ist. Die Abführleitungen 14, 15 führen schließlich in eine gemeinsame Ablaßleitung 18. Ausgangsseitig schließen sich an die Adsorber 3, 4 Abführleitungen 19, 20 an, in denen sich die Steuerventile 7, 8 befinden. Die Abführleitungen 19, 20 fuhren über eine gemeinsame Abführleitung 21 in einen den Adsorbern 3, 4 nachgeschalteten Ausgleichsbehälter 22, der als Puffer für sauerstoffangereicherte Verbrennungsluft dient Nicht dargestellt ist, daß auch ein den Absorbern 3, 4 vorgeschalteter Ausgleichsgehälter vorgesehen sein kann.

Nicht dargestellt ist, daß im Ausgleichsbehälter 22 ein Überdruckventil vorgesehen sein kann, das bei Erreichen eines gewissen Druckes zum Ablassen vom sauerstoffangereicherter Verbrennungsluft dient, um auf diese Weise Beschädigungen des Ausgleichsbehälters auszuschließen. An den Ausgleichsbehälter 22 schließt sich eine Abführleitung 23 an, in der sich ebenfalls ein Steuerventil 24 befindet. In die Abführleitung 23 mündet im übrigen eine die Adsorptionseinrichtung 1 überbrückende Bypaßleitung 25, in der sich ebenfalls ein Steuerventil 26 befindet. Vorliegend ist die Bypaßleitung 25 mit der Verdichtungseinrichtung 9 verbunden. Dies kann, muß aber nicht der Fall sein. Die Leitung 23 führt in den Brennraum 2, von dem eine Abgasleitung 40 abgeht

Des weiteren weist die Adsorptionseinrichtung 1 eine Steuereinrichtung 27 auf, die unter anderem zur Umschaltung der Adsorber 3, 4 dient, so daß die Adsorber im Wechsel betrieben werden können. Die Steuereinrichtung 27 steuert hierzu die zuvor genannten Steuerventile an, wie dies nachfolgend im einzelnen beschrieben wird.

Nicht dargestellt ist im übrigen die Möglichkeit der Adsorberbeheizung bzw. der Drucklufterwärmung der den Adsorbern 3, 4 zugeführten Druckluft.

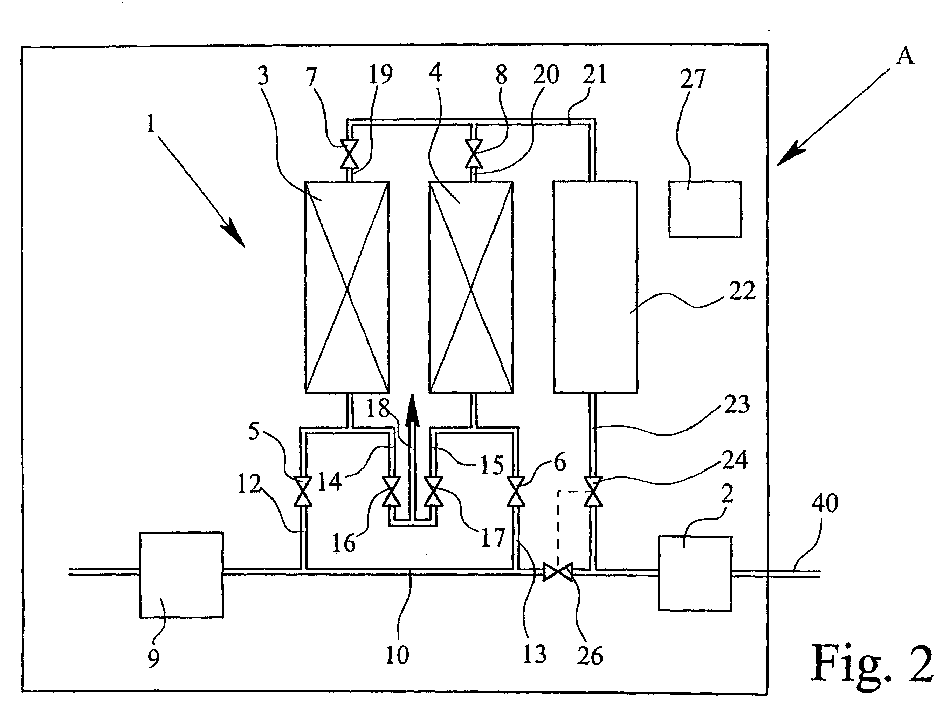

Die in Fig. 2 dargestellte Ausführungsform unterscheidet sich von der in Fig. 1 dargestellten dadurch, daß statt der Bypaßleitung 25 die Leitung 10 durchgehend ist, die Abführleitung 23 also in die Leitung 10 mündet. Bei der Verdichtungseinrichtung 9 handelt es sich vorliegend um einen Kolbenverdichter oder alternativ um einen Schraubenverdichter.

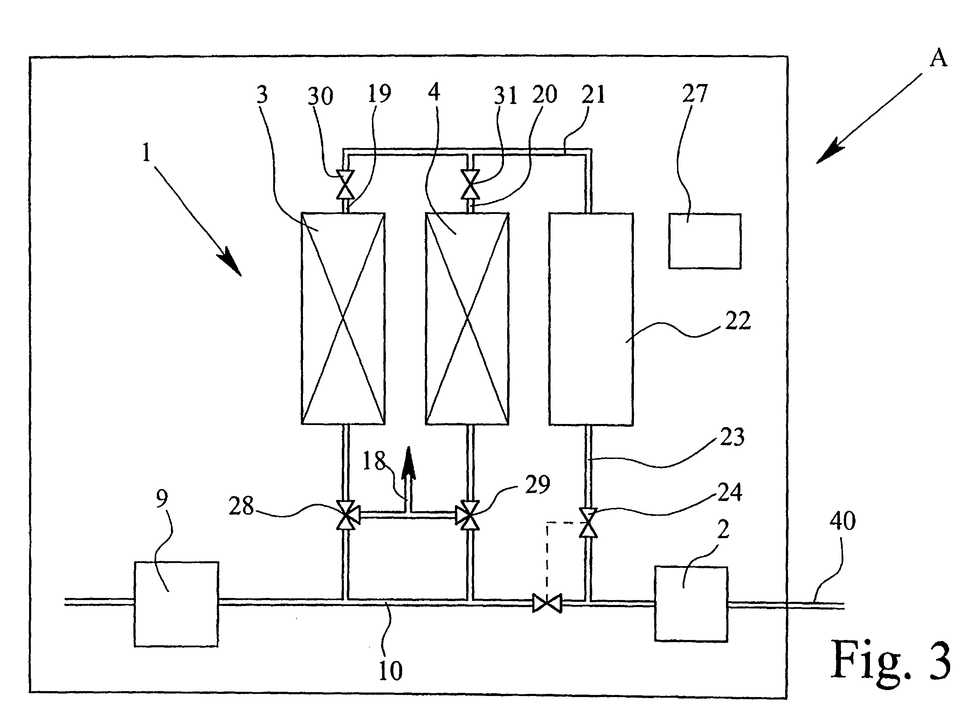

Die in Fig. 3 dargestellte Ausführungsform unterscheidet sich von der zuvor beschriebenen Ausführungsform dadurch, daß die Steuerventile 5, 6 und 16, 17 durch zwei 3-Wege-Ventile 28, 29 ersetzt worden sind, die relaisgesteuert sind. Des weiteren sind die Steuerventile 7, 8 durch Rückschlagventile 30, 31 ersetzt worden. Die beiden Rückschlagventile 30, 31 können im übrigen auch als ein 3-Wege-Ventil ausgebildet sein.

Das erfindungsgemäße Verfahren läuft nun unter Bezugnahme auf Fig. 1 derart ab, daß zunächst Verbrennungsluft von der Verdichtungseinrichtung 9 angesaugt wird. Die Steuerung des Motors ist dabei im übrigen bei einer bevorzugten Ausführungsform derart ausgelegt, daß zunächst die Verdichtungseinrichtung 9 startet, bevor die Zündung des Gemisches im Brennraum 2 erfolgt. Hierdurch ist sichergestellt, daß schon zu Beginn des Verbrennungsprozesses dem Brennraum sauerstoffangereicherte Verbrennungsluft zugeführt werden kann. In der Verdichtungseinrichtung 9 wird die Verbrennungsluft dann auf einen Druck zwischen 3 und 5 bar verdichtet. Zumindest ein Teil der Verbrennungsluft wird über die Leitung 10 und das geöffnete Steuerventil 11 dem Adsorber 3 zugeführt. Das Steuerventil 5 ist in diesem Falle geöffnet, das Steuerventil 6 ist hingegen geschlossen. Im übrigen sind auch die Steuerventile 16 und 8 geschlossen. Das Steuerventil 17 ist hingegen geöffnet.

Die verdichtete Verbrennungsluft strömt nun durch den Adsorber 3, und zwar zunächst durch das Trockenmittel und anschließend durch das Stickstoff adsorbierende Zeolith. Durch die Adsorption des Stickstoffes ergibt sich eine Sauerstoffanreicherung der Verbrennungsluft, die dann über die Leitung 19 und das geöffnete Steuerventil 7 den Adsorber 3 wieder verläßt und anschließend über die Abführleitung 21 dem Ausgleichsbehälter 22 zugeführt wird. Die sauerstoffangereicherte Verbrennungsluft aus dem Ausgleichsbehälter 22 strömt über die Abführleitung 23 und das geöffnete Steuerventil 24 in Richtung des Brennraumes 2.

Um einen dauerhaften Betrieb der Adsorptionseinrichtung 1 zu gewährleisten, wird in regelmäßigen Abständen von etwa einer Minute zwischen den Adsorbern 3, 4 umgeschaltet. Nachdem der Adsorber 3 zur Adsorption durchströmt worden ist, werden bei geöffneten Steuerventilen 5, 7 das Steuerventil 17 geschlossen und die Steuerventile 6, 8 geöffnet. Die über die Verdichtungseinrichtung 9 komprimierte Verbrennungsluft strömt dann kurzzeitig durch beide Adsorber 3, 4. Anschließend werden die Steuerventile 5, 7 geschlossen, so daß die komprimierte Verbrennungsluft nur noch durch den Adsorber 4 strömt und, in gleicher Weise wie zuvor beschrieben, dem Ausgleichsbehälter 22 zugeführt wird. Mit Schließen der Steuerventile 5, 7 wird das Steuerventil 16 geöffnet. Durch Öffnen des Steuerventils 16 findet ein Druckabbau im Adsorber 3 und eine gleichzeitige Desorption des Stickstoffes im Adsorber 3 statt. Die im Adsorber 3 befindliche Verbrennungsluft, die dann sehr stark mit Stickstoff angereichert ist, strömt über die Ablaßleitung 18 ab. Das Steuerventil 16 bleibt so lange geöffnet, wie die Steuerventile 5, 7 geschlossen sind, der Adsorber 3 sich also nicht in der Adsorptionsphase befindet. Hierdurch kann der Stickstoff aus dem Adsorptionsmittel im Adsorber 3 im wesentlichen vollständig desorbieren. Gegen Ende des Adsorptionsvorganges im Adsorber 4 wird dann das Steuerventil 16 wieder geschlossen und anschließend werden die Steuerventile 5, 7 geöffnet. Nach einer kurzen Zeitdauer werden die Steuerventile 6, 8 wieder geschlossen, so daß anschließend das Steuerventile 17 wieder geöffnet wird, um die Desorption des Stickstoffs aus dem Adsorptionsmittel im Adsorber 4 zu ermöglichen.

Nicht dargestellt ist, daß der Sauerstoffgehalt der Verbrennungsluft nach der Adsorption gemessen und in Abhängigkeit von der Betriebssituation des Verbrennungsmotors geregelt oder gesteuert werden kann. Hierzu kann bedarfsweise über die Steuerventile 24, 26 ein mehr oder minder größerer Anteil von sauerstoffangereicherter Verbrennungsluft oder nichtsauerstoffangereicherter Verbrennungsluft den Verbrennungsraum 2 zugeführt werden. Die Steuerventile 24, 26 lassen also eine Sauerstoffkonzentrationsregelung zu. Die Einstellung der Menge bzw. des Verhältnisses von sauerstoffangereicherter und nichtsauerstoffangereicherter Verbrennungsluft erfolgt über die Steuereinrichtung 27.

Wird der Motor abgestellt, so werden die Ventile 7, 8 und 24 geschlossen, so daß sich der im Ausgleichsbehälter 22 vorhandene Druck hält bzw. nicht abfällt. Der zuvor beschriebene Verfahrensablauf gilt im übrigen in gleicher Weise für die in den Fig. 2 und 3 dargestellten Ausführungsformen. Die in den Fig. 1 bis 3 dargestellte Ausführungsform eignet sich besonders gut, wenn das Kraftfahrzeug A bzw. der Verbrennungsmotor einen Turbolader aufweist, wobei dem Brennraum 2 dann jeweils ganz gezielt sauerstoffangereicherte Verbrennungsluft zugeführt wird, um während des Anlaufens des Turboladers einen Leistungsausgleich für das auftretende Turboloch zur Verfügung zu stellen.

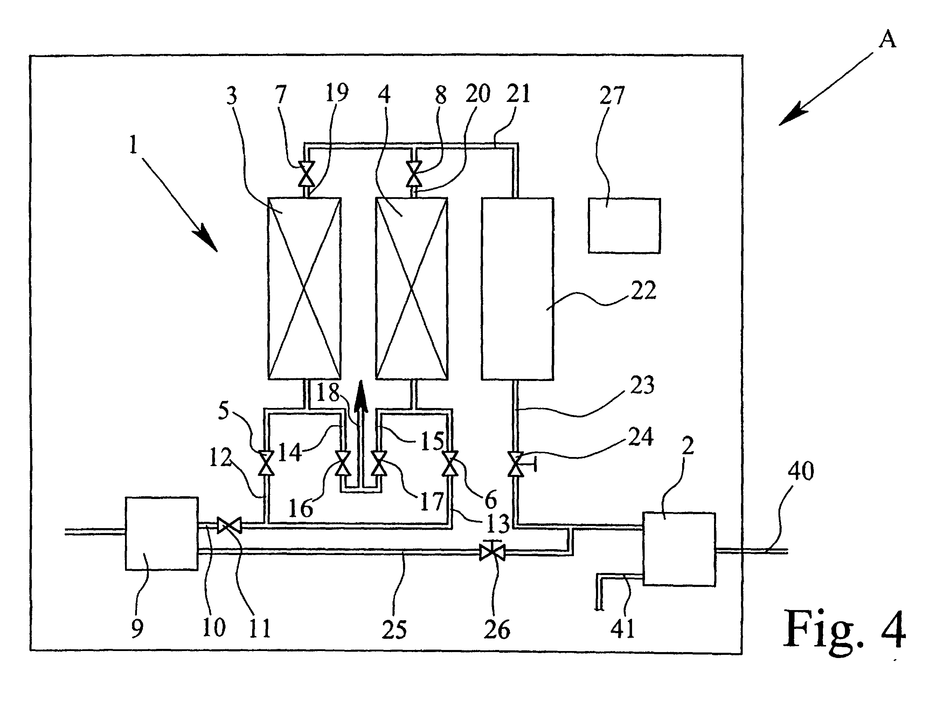

In Fig. 4 ist eine Ausführungsform dargestellt, bei der dem Brennraum 2 über eine Leitung 41 nicht-sauerstoffangereicherte Verbrennungsluft zugeführt wird, während über die Leitung 23 bzw. Zuführung, die von der Leitung 41 unabhängig ist, sauerstoffangereicherte Verbrennungsluft zugeführt wird. Auf diese Weise ist es möglich, an ganz bestimmten Stellen im Brennraum gezielt Sauerstoff zuzugeben, um eine verbesserte Verbrennung gewährleisten zu können.

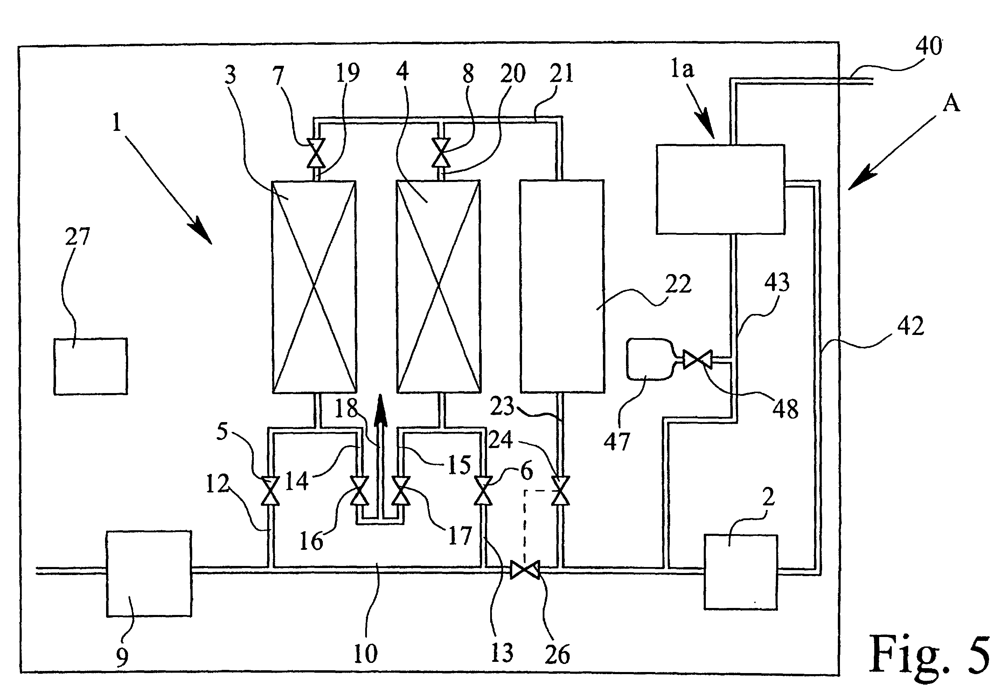

In Fig. 5 ist eine Ausführungsform dargestellt, bei der zwei Adsorptionseinrichtungen 1 und la vorgesehen sind. Die erste Adsorptionseinrichtung 1 dient zur Sauerstoffanreicherung bzw. zum Entfernen des Stickstoffs aus der Verbrennungsluft. Im Gegensatz zu den zuvor beschriebenen Ausführungsformen kann hierbei der Stickstoff in einem hohen Maße aus der Verbrennungsluft entfernt werden. Vor der Zuführung dieser sauerstoffangereicherten Verbrennungsluft zum Brennraum 2 wird ein Trägergas zugegeben, das an der Verbrennung im Brennraum nicht teilnimmt und im Abgas als solches vorliegt. Hierbei handelt es sich vorzugsweise um Helium. Aber auch der Einsatz anderer Edel- und/oder Inertgase als Trägergas ist möglich. Hierbei ersetzt das Trägergas zumindest im wesentlichen den Stickstoffanteil des der Verbrennung zugeführten Gases. Dabei ist es so, daß die Abgase über die Leitung 42 der weiteren Adsorptionseinrichtung 1 a zugeführt werden, wo das Trägergas rückgewonnen wird, während die sonstigen Abgase über die Abgasleitung 40 abgeführt werden. Die weitere Adsorptionseinrichtung la dient also zur Rückgewinnung des Trägergases und ist entsprechend ausgebildet, wobei eine Reihe von Übereinstimmungen zur Adsorptionseinrichtung 1 aber auch Unterschiede bestehen. Über die Leitung 43 wird dann das Trägergas wieder der sauerstoffangereicherten Verbrennungsluft vor der Verbrennung zugeführt. Weiterhin ist ein Ausgleichsbehälter 47 mit einem Regelventil 48 vorgesehen. Über den Ausgleichsbehälter 47 wird unter Druck stehendes Trägergas zur Verfügung gestellt. Der Ausgleichsbehälter 47 dient zur Systembefüllung und zum Ausgleich der während des Verbrennungsprozesses über die Leitung 40 entwichenen Menge an Trägergas.

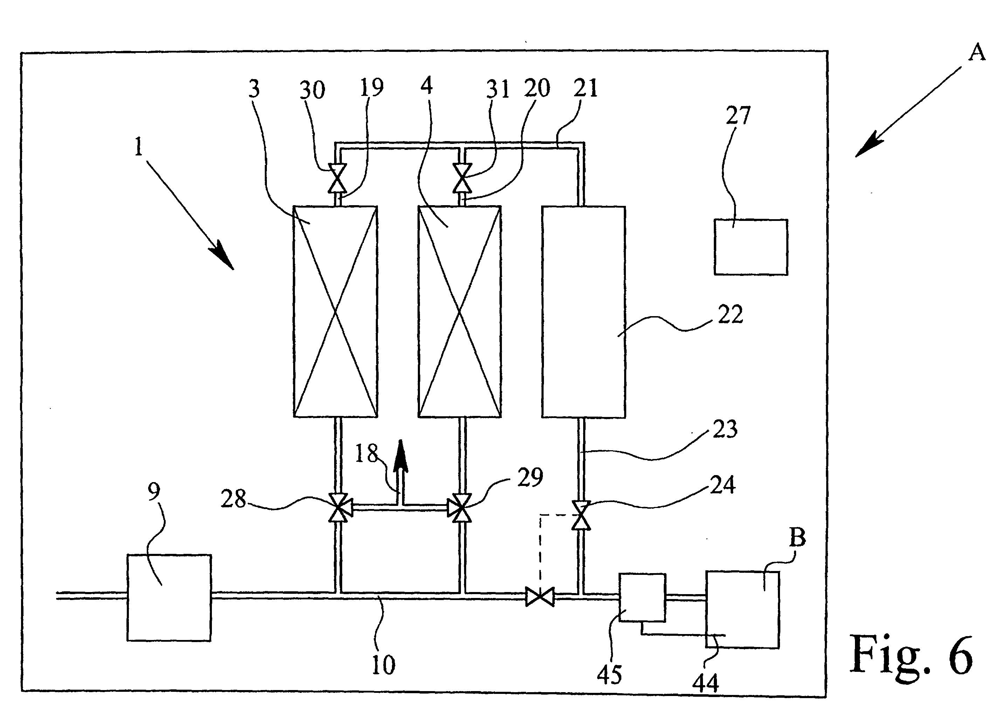

Bei der Ausführungsform gemäß Fig. 6 ist es so, daß über die Adsorptionseinrichtung 1 sauerstoffangereicherte Luft der Fahrgastzelle B zugeführt wird. In der Fahrgastzelle B wird über eine entsprechende Meßeinrichtung 44 der Sauerstoffgehalt der Luft in der Fahrgastzelle gemessen. Über eine Steuereinrichtung 45 wird aufgrund des gemessenen Sauerstoffgehalts der Fahrgastzelle B sauerstoffangereicherte Luft zugeführt, bis der Sauerstoffgehalt in der Fahrgastzelle B dem Sauerstoffgehalt der Umgebungsluft oder einem entsprechend vorgegebenen Sauerstoffgehalt entspricht. Vorzugsweise spricht die Steuereinrichtung 45 immer dann an, wenn das Lüftungssystem des Kraftfahrzeugs A im Umluftbetrieb arbeitet. In diesem Falle wird nämlich die in der Fahrgastzelle vorhandene Luft stets nur zirkuliert, wobei durch den Sauerstoffverbrauch sich die Luftqualität verschlechtert. Dies wird durch die in Fig. 6 dargestellte Ausführungsform ausgeschlossen.

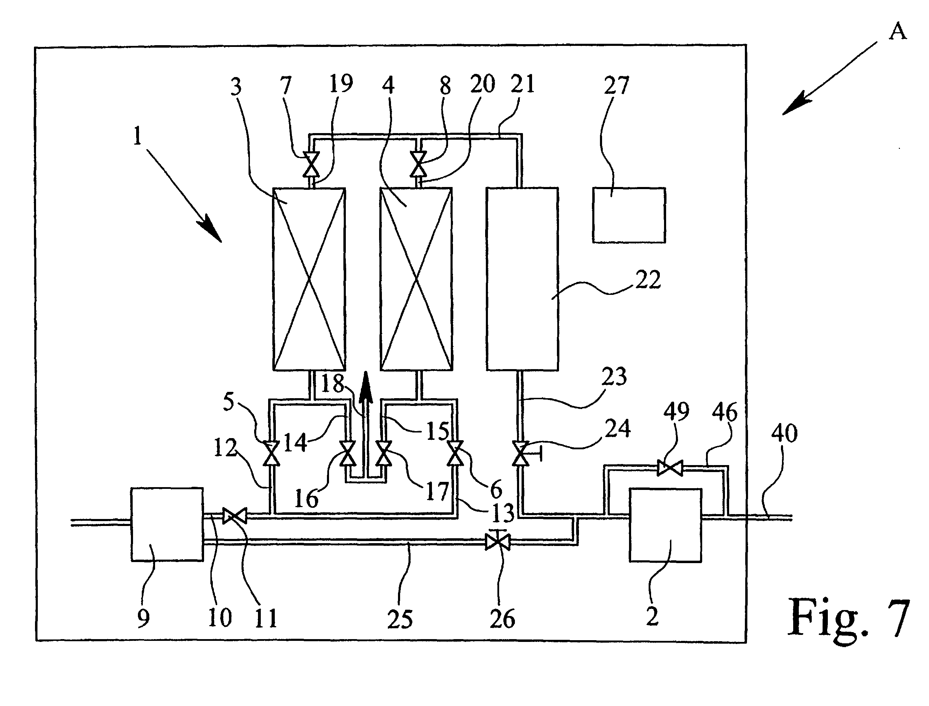

Bei der in Fig. 7 dargestellten Ausführungsform zweigt von der Leitung 23 eine Bypassleitung 46 ab. Diese dient dazu, sauerstoffangereicherte Verbrennungsluft der Abgasleitung 40 über ein Regelventil 49 zuzuführen. Nicht dargestellt ist, daß die Leitung 23 auch direkt in die Leitung 46 übergehen kann, ohne daß sauerstoffangereicherte Verbrennungsluft dem Brennraum 2 zugeführt wird. Durch die Zuführung sauerstoffangereicherter Luft in die Abgasleitung 40 ergibt sich eine Nachverbrennung der Schadstoffe und damit eine Abgasreinigung.

Es ist darauf hinzuweisen, daß sich der Schutz der vorliegenden Erfindung auch auf die in den einzelnen Figuren dargestellten Motoren und Vorrichtungen an sich richtet, auch wenn in den Ansprüchen zum Teil nur Verfahren beansprucht sind.

Im übrigen versteht es sich, daß alle dargestellten Ausführungsformen grundsätzlich auch miteinander kombinierbar sind.

## Patentansprüche

1. Verfahren zum Betreiben eines Verbrennungsmotors eines Kraftfahrzeuges (A), bei dem in wenigstens einem Brennraum (2) ein Gemisch aus Verbrennungsluft und Kraftstoff verbrannt wird, **dadurch gekennzeichnet, daß** einer wenigstens einen Adsorber (3, 4) aufweisenden Adsorptionseinrichtung (1) Luft zugeführt wird, um eine Sauerstoffanreicherung dieser Luft durch Abtrennung zumindest eines Teils des Stickstoffs dieser Luft zu erzielen und daß die sauerstoffangereicherte Luft dem Abgasstrom im Anschluß an die Verbrennung zugeführt wird.

2. Verfahren zum Betreiben eines Verbrennungsmotors eines Kraftfahrzeuges (A) bei dem in wenigstens einem Brennraum (2) ein Gemisch aus Verbrennungsluft und Kraftstoff verbrannt wird, wobei einer wenigstens einen Adsorber (3, 4) aufweisenden Adsorptionseinrichtung (1) Verbrennungsluft zugeführt wird, um eine Sauerstoffanreicherung dieser Verbrennungsluft durch Abtrennung zumindest eines Teils des Stickstoffs aus dieser Verbrennungsluft zu erzielen, wobei lediglich ein Teil der der Verbrennung zugeführten Verbrennungsluft sauerstoffangereichert wird und wobei dem Brennraum (2) über eine von der Adsorptionseinrichtung (1) unabhängige Leitung (41) nicht-sauerstoffangereicherte Verbrennungsluft einerseits und über eine von dieser Leitung separate Zuführung (23) sauerstoffangereicherte Verbrennungsluft andererseits zugeführt wird, **dadurch gekennzeichnet, daß** vor dem Starten des Verbrennungsmotors eine Verdichtungseinrichtung zur Erzeugung des Überdrucks beim Adsorbieren gestartet wird.

3. Verfahren zum Betreiben eines einen Turbolader aufweisenden Verbrennungsmotors eines Kraftfahrzeuges (A), bei dem in wenigstens einem Brennraum (21) ein Gemisch aus Verbrennungsluft und Kraftstoff verbrannt wird, wobei einer wenigstens einen Adsorber (3, 4) aufweisenden Adsorptionseinrichtung (1) Verbrennungsluft zugeführt wird, um eine Sauerstoffanreicherung dieser Verbrennungsluft durch Abtrennung zumindest eines Teils des Stickstoffs aus dieser Verbrennungsluft zu erzielen, wobei dem Verbrennungsmotor während des Anlaufens des Turboladers derart sauerstoffangereicherte Verbrennungsluft zugeführt wird, daß das beim Anlaufen des Turboladers auftretende Turboloch zumindest im wesentlichen ausgeglichen wird, insbesondere nach einem der vorhergehenden Ansprüche.

4. Verfahren zum Betreiben eines Verbrennungsmotors eines Kraftfahrzeuges (A), bei dem in wenigstens einem Brennraum ein Gemisch aus Verbrennungsluft und Kraftstoff verbrannt wird, wobei einer wenigstens einen Adsorber (3, 4) aufweisenden Adsorptionseinrichtung (1) Verbrennungsluft zugeführt wird, um eine Sauerstoffanreicherung dieser Verbrennungsluft durch Abtrennung zumindest eines Teils des Stickstoffs aus dieser Verbrennungsluft zu erzielen, insbesondere nach einem der vorhergehenden Verfahrensansprüche, **dadurch gekennzeichnet, daß** der sauerstoffangereicherten Verbrennungsluft vor der Verbrennung ein Trägergas zugegeben wird, wobei es sich nicht um rezirkuliertes Abgas handelt, und daß das Trägergas an der Verbrennung im Brennraum nicht teilnimmt und im Abgas als solches vorliegt.

5. Verfahren nach Anspruch 4, **dadurch gekennzeichnet, daß** das Trägergas im Kreislauf geführt wird und im Anschluß an die Verbrennung zurückgewonnen wird.

6. Verfahren nach Anspruch 4 oder 5, **dadurch gekennzeichnet, daß** die Zugabe/Rückgewinnung des Trägergases in Abhängigkeit der Motorleistung des Verbrennungsmotors gesteuert oder geregelt wird.

7. Verfahren nach einem der Ansprüche 1 bis 6, **dadurch gekennzeichnet, daß** die Verbrennungsluft vor dem Zuführen zur Adsorptionseinrichtung erwärmt wird und/oder daß das Trockenmittel und/oder das Adsorptionsmittel im Adsorber erwärmt wird.

8. Verfahren nach einem der Ansprüche 1 und 3 bis 7, **dadurch gekennzeichnet, daß** vor dem Starten des Verbrennungsmotors eine Verdichtungseinrichtung zur Erzeugung des Überdrucks beim Adsorbieren gestartet wird.

9. Verfahren nach einem der vorhergehenden Ansprüche, **dadurch gekennzeichnet daß** der der Verbrennung zugeführten, nicht-sauerstoffangereicherten Verbrennungsluft ein Teilstrom sauerstoffangereicherter Verbrennungsluft insbesondere mit Überdruck zudosiert wird.

10. Verfahren nach einem der vorhergehenden Ansprüche, **dadurch gekennzeichnet, daß** die sauerstoffangereicherte Verbrennungsluft in einer solchen Menge zur nicht-sauerstoffangereicherten Verbrennungsluft dosiert wird, daß der Sauerstoffanteil der der Verbrennung zugeführten Verbrennungsluft zwischen 21% und 60%, vorzugsweise zwischen 22% und 30% beträgt.

11. Verfahren nach einem der vorhergehenden Ansprüche, **dadurch gekennzeichnet, daß** während des Adsorbierens ein Überdruck im Adsorber (3, 4), insbesondere zwischen 2 und 10 bar, vorzugsweise zwischen 3 und 5 bar herrscht

12. Verfahren nach einem der vorhergehenden Ansprüche, **dadurch gekennzeichnet, daß** wenigstens zwei parallel geschaltete Adsorber (3, 4) vorgesehen sind und daß regelmäßig oder in Abhängigkeit der Motorleistung oder in Abhängigkeit des Sättigungsgrades des Trockenmittels oder der Zeolithe zwischen den Adsorbern (3, 4) umgeschaltet wird.

13. Verfahren nach einem der vorhergehenden Ansprüche, **dadurch gekennzeichnet, daß** ein Adsorber (3, 4) mindestens 20 Sek. zur Adsorption betrieben wird, bevor auf den anderen Adsorber (3, 4) umgeschaltet wird und daß, vorzugsweise, die Adsorber (3, 4) für einen kurzen Zeitraum gleichzeitig betrieben werden.

14. Verfahren nach einem der vorhergehenden Ansprüche, **dadurch gekennzeichnet, daß** nach dem Umschalten von dem einen Adsorber auf den anderen Adsorber der eine Adsorber geöffnet wird, so daß der adsorbierte Stickstoff aus dem einen Adsorber desorbiert und an die Umgebung abgegeben wird und daß, vorzugsweise, der eine Adsorber etwa während der gesamten Adsorptionsphase des anderen Adsorbers geöffnet ist.

15. Verfahren nach einem der vorhergehenden Ansprüche, **dadurch gekennzeichnet, daß** der Adsorber während der Desorptionsphase insbesondere mit sauerstoffangereicherter Verbrennungsluft gespült, insbesondere rückgespült wird.

16. Verfahren nach einem der vorhergehenden Ansprüche, **dadurch gekennzeichnet, daß** der Sauerstoffgehalt der Verbrennungsluft nach der Adsorption gemessen und in Abhängigkeit von bestimmten Betriebssituationen, insbesondere zum Start des Verbrennungsmotors geregelt oder gesteuert wird.

17. Verfahren nach einem der vorhergehenden Verfahrensansprüche, **dadurch gekennzeichnet, daß** in der Fahrgastzelle (B) des Kraftfahrzeuges (A) im Umluftbetrieb Luft zirkuliert wird, daß der Sauerstoffgehalt in der Fahrgastzelle (B) während des Umluftbetriebs gemessen und in Abhängigkeit des gemessenen Sauerstoffgehalts der Luft in der Fahrgastzelle (B) sauerstoffangereicherte Luft aus der Adsorptionseinrichtung (1) der Fahrgastzelle (B) zugeführt wird.

## Claims

1. Method for operating a combustion engine of a motor vehicle (A) in which a mixture of combustion air and fuel is combusted in at least one combustion chamber (2), **characterized in that** combustion air is supplied to an adsorption device (1) having at least one adsorber (3, 4) in order to enrich this combustion air with oxygen by separating out at least a portion of the nitrogen from this combustion air and that the oxygen-enriched air is supplied to the exhaust gas stream subsequent to combustion.

2. Method for operating a combustion engine of a motor vehicle (A) in which a mixture of combustion air and fuel is combusted in at least one combustion chamber (2), wherein combustion air is supplied to an adsorption device (1) having at least one adsorber (3, 4) in order to enrich this combustion air with oxygen by separating out at least a portion of the nitrogen from this combustion air, wherein only a portion of the combustion air supplied to combustion is enriched with oxygen, and that the combustion chamber (2) is supplied with non-oxygen-enriched combustion air via a line (41) independent from the adsorption device (1) on the one hand, and with oxygen-enriched combustion air via an inlet (23) separate from this line on the other **characterized in that** a compressor device for generating the excess pressure during adsorption is activated before starting the combustion engine.

3. Method for operating a combustion engine of a motor vehicle (A) having a turbocharger, in which a mixture of combustion air and fuel is combusted in at least one combustion chamber (21), wherein combustion air is supplied to an adsorption device (1) having at least one adsorber (3, 4) in order to enrich this combustion air with oxygen by separating at least a portion of the nitrogen from this combustion air, wherein oxygen-enriched combustion air is supplied to the combustion engine during turbocharger startup in such a way that the turbo lag that arises during turbocharger startup is at least essentially compensated for, in particular according to one of the preceding claims.

4. Method for operating a combustion engine of a motor vehicle (A), in which a mixture of combustion air and fuel is combusted in at least one combustion chamber, wherein combustion air is supplied to an adsorption device (1) having at least one adsorber (3, 4), in order to enrich this combustion air with oxygen by separating at least a portion of the nitrogen from this combustion air, in particular according to one of the preceding method claims, **characterized in that** a carrier gas is added to the oxygen-enriched combustion air before the combustion , that the carrier gas does not participate in combustion in the combustion chamber and is present in the exhaust gas as such.

5. Method according to claim 4, **characterized in that** the carrier gas is circulated, and recovered after combustion.

6. Method according to claim 5 or 6, **characterized in that** the addition/recovery of the carrier gas is controlled or regulated as a function of the engine power of the combustion engine.

7. Method according to any one of claims 1 to 6, **characterized in that** the combustion air is heated before being supplied to the adsorption device and/or that the desiccant and/or adsorbent is heated in the adsorber.

8. Method according to any one of claims 1 and 3 to 7, **characterized in that** a compressor device for generating the excess pressure during adsorption is activated before starting the combustion engine.

9. Method according to any one of the previous claims, **characterized in that** a partial stream of oxygen-enriched combustion air is metered into the non-oxygen-enriched combustion air supplied to combustion, in particular under an excess pressure.

10. Method according to any one of the preceding claims, **characterized in that** the oxygen-enriched combustion air is metered into the non-oxygen-enriched combustion air in such a quantity that the percentage of oxygen in the combustion air supplied to combustion measures between 21 % and 60 %, preferably between 22 % and 30 %.

11. Method according to any one of the preceding claims, **characterized in that** an excess pressure prevails in the adsorber (3, 4) during the adsorption, in particular between 2 and 10 bar, preferably between 3 and 5 bar.

12. Method according to any one of the preceding claims, **characterized in that** at least two parallel connected adsorbers (3, 4) are provided, and that a switch is made between the adsorbers (3, 4) at regular intervals, as a function of the engine power, or as a function of the level of saturation with desiccant or zeolites.

13. Method according to any one of the preceding claims, **characterized in that** an adsorber (3, 4) is operated at least 20 seconds for adsorption until a switch is made to the other adsorber (3, 4) and that, preferably, the adsorbers (3, 4) are operated simultaneously for a short period.

14. Method according to any one of the preceding claims, **characterized in that** the one adsorber is opened after a switch has been made from the one adsorber to the other adsorber, so that the adsorbed nitrogen is desorbed from the one adsorber and released into the environment, and that, preferably, the one adsorber is opened during roughly the entire adsorption phase of the other adsorber.

15. Method according to any one of the preceding claims, **characterized in that** the adsorber is scavenged in particular with oxygen-enriched combustion air during the desorption phase, especially reverse-scavenged.

16. Method according to any one of the preceding claims, **characterized in that** the oxygen content in the combustion air is measured after adsorption and regulated or controlled as a function of specific operating situation, in particular for starting the combustion engine.

17. Method according to any one of the preceding claims, **characterized in that** air is circulated in the passenger compartment (B) of the motor vehicle (A) in the ambient air vent operating mode, that the oxygen content in the passenger compartment (B) is measured during ambient air vent operation, and oxygen-enriched air from the adsorption device (1) of the passenger compartment (B) is supplied to the air in the passenger compartment (B) as a function of the measured oxygen content.

## Revendications

1. Procédé pour l'exploitation d'un moteur à combustion d'un véhicule automobile (A), avec lequel un mélange d'air de combustion et de carburant est brûlé dans au moins une chambre de combustion (2), **caractérisé en ce que** de l'air est amené à un dispositif d'adsorption (1) présentant au moins un absorbant (3, 4) pour obtenir un enrichissement en oxygène de cet air par séparation d'au moins une partie de l'azote de cet air et **en ce que** l'air enrichi en oxygène est amené au flux de gaz brûlé à la suite de la combustion.

2. Procédé pour l'exploitation d'un moteur à combustion d'un véhicule automobile (A), avec lequel un mélange d'air de combustion et de carburant est brûlé dans au moins une chambre de combustion (2), moyennant quoi de l'air de combustion est amené à un dispositif d'adsorption (1) présentant au moins un adsorbant (3, 4), afin d'obtenir un enrichissement en oxygène de cet air de combustion par séparation d'au moins une partie de l'azote de cet air de combustion, moyennant quoi seule une partie de l'air de combustion amené à la combustion est enrichie en oxygène et moyennant quoi d'une part de l'air de combustion non enrichi en oxygène est amené à la chambre de combustion (2) par une conduite (41) indépendante du dispositif d'adsorption (1) et d'autre part de l'air de combustion enrichi en oxygène est amené à la chambre de combustion par une arrivée (23) séparée de cette première conduite, **caractérisé en ce que**, avant le démarrage du moteur à combustion, un dispositif de compression est démarré pour générer la surpression lors de l'adsorption.

3. Procédé pour l'exploitation d'un moteur à combustion, présentant un turbocompresseur, d'un véhicule automobile (A), avec lequel un mélange d'air de combustion et de carburant est brûlé dans au moins une chambre de combustion (21), moyennant quoi de l'air de combustion est amené à un dispositif d'adsorption (1) présentant au moins un adsorbant (3, 4) afin d'obtenir un enrichissement en oxygène de cet air de combustion par séparation d'au moins une partie de l'azote de cet air de combustion, moyennant quoi de l'air de combustion ainsi enrichi en oxygène est amené au moteur à combustion pendant le démarrage du turbocompresseur, en ce que le trou turbo qui apparaît lors du démarrage du turbo compresseur est compensé au moins pour l'essentiel, en particulier selon l'une quelconque des revendications précédentes,

4. Procédé pour l'exploitation d'un moteur à combustion d'un véhicule automobile (A), avec lequel un mélange d'air de combustion et de carburant est brûlé dans au moins une chambre de combustion, moyennant quoi de l'air de combustion est amené à un dispositif d'adsorption (1) présentant au moins un adsorbant (3, 4) afin d'obtenir un enrichissement en oxygène de cet air de combustion par la séparation d'au moins une partie de l'azote de cet air de combustion, en particulier selon l'une quelconque des revendications précédentes du procédé, **caractérisé en ce qu'**un gaz porteur est ajouté à l'air de combustion enrichi en oxygène avant la combustion, moyennant quoi il ne s'agit pas de gaz brûlé recyclé, et **en ce que** le gaz porteur ne participe pas à la combustion dans la chambre de combustion et est présent en tant que tel dans le gaz brûlé.

5. Procédé selon la revendication 4, **caractérisé en ce que** le gaz porteur est guidé dans le circuit et recyclé à la suite de la combustion.

6. Procédé selon la revendication 4 ou 5, **caractérisé en ce que** l'addition/le recyclage du gaz porteur sont commandés ou réglés en fonction de la puissance du moteur à combustion.

7. Procédé selon l'une quelconque des revendications 1 à 6, **caractérisé en ce que** l'air de combustion est réchauffé avant l'arrivée au dispositif d'adsorption et/ou **en ce que** l' agent desséchant et/ou l'agent d'adsorption est (sont) réchauffé(s) dans l'adsorbant.

8. Procédé selon l'une quelconque des revendications 1 et 3 à 7, **caractérisé en ce qu'**un dispositif de compression pour générer la surpression lors de l'adsorption est démarré avant le démarrage du moteur à combustion.

9. Procédé selon l'une quelconque des revendications précédentes, **caractérisé en ce qu'**un flux partiel d'air de combustion enrichi en oxygène est ajouté de façon dosée en particulier avec de la surpression à l'air de combustion amené à la combustion et non enrichi en oxygène.

10. Procédé selon l'une quelconque des revendications précédentes, **caractérisé en ce que** l'air de combustion enrichi en oxygène est dosé dans une telle quantité par rapport à l'air de combustion non enrichi en oxygène que la fraction d'oxygène de l'air de combustion amené à la combustion se situe entre 21 % et 60 %, de préférence entre 22 % et 30 %.

11. Procédé selon l'une quelconque des revendications précédentes, **caractérisé en ce que**, pendant l'adsorption, une surpression règne dans l'adsorbant (3, 4) en particulier entre 2 et 10 bars, de préférence entre 3 et 5 bars.

12. Procédé selon l'une quelconque des revendications précédentes, **caractérisé en ce qu'**au moins deux adsorbants (3, 4) montés en parallèles sont prévus et **en ce qu'**on commute entre les adsorbants (3, 4) de façon régulière ou en fonction de la puissance du moteur ou en fonction du degré de saturation du produit desséchant ou des zéolites.

13. Procédé selon l'une quelconque des revendications précédentes, **caractérisé en ce qu'**un adsorbant (3, 4) est exploité pendant au moins 20 secondes pour l' adsorption, avant de commuter sur l'autre adsorbant (3, 4) et **en ce que**, de préférence, les adsorbants (3, 4) sont exploités simultanément pour une courte période.

14. Procédé selon l'une quelconque des revendications précédentes, **caractérisé en ce que**, après la commutation d'un adsorbant à l'autre adsorbant, l'un des adsorbants est ouvert de telle sorte que l'azote adsorbé est désorbé de l'un des adsorbants et est évacué dans l'environnement et **en ce que**, de préférence, l'un des adsorbants est ouvert à peu près pendant toute la phase d'adsorption de l'autre adsorbant.

15. Procédé selon l'une quelconque des revendications précédentes, **caractérisé en ce que** l'adsorbant est lavé, en particulier lavé à contre-courant pendant la phase de désorption en particulier avec de l'air de combustion enrichi en oxygène.

16. Procédé selon l'une quelconque des revendications précédentes, **caractérisé en ce que** la teneur en oxygène de l'air de combustion est mesurée après l'adsorption et est réglée ou contrôlée en fonction de certaines situations d'exploitation, en particulier pour le démarrage du moteur à combustion.

17. Procédé selon l'une quelconque des revendications de procédés précédentes, **caractérisé en ce que** de l'air est en circulation dans l'habitacle (B) du véhicule (A) en mode de circulation d'air, **en ce que** la teneur en oxygène dans l'habitacle(B) est mesurée pendant le mode de circulation d'air et de l'air enrichi en oxygène provenant du dispositif d'adsorption (1) est amené à l'habitacle (B) en fonction de la teneur en oxygène mesurée de l'air dans l'habitacle (B).
